# EUROPÄISCHE PATENTSCHRIFT

(11) **EP 1 027 237 B1**
(45) Veröffentlichungstag und Bekanntmachung des Hinweises auf die Patenterteilung: **08.09.2004**
(21) Anmeldenummer: 99938143.7
(22) Anmeldetag: 08.06.1999
(51) Int. Cl.: B60S 1/34

(54) **WISCHERARM**
WIPER ARM
BRAS D'ESSUIE-GLACE

(30) Priorität: 08.06.1998 DE 19825529
(43) Veröffentlichungstag der Anmeldung: 16.08.2000
(73) Patentinhaber: ROBERT BOSCH GMBH, 70442 Stuttgart (DE)
(72) Erfinder: VAN DE BRUINHORST, Ben, B-3800 Zepperen (BE)
(86) Internationale Anmeldenummer: PCT/DE1999/001676
(87) Internationale Veröffentlichungsnummer: WO 1999/064277

(56) Entgegenhaltungen:
- EP-A- 0 785 116
- DE-U- 1 985 505
- FR-A- 2 401 803
- FR-A- 2 443 948

## Beschreibung

### Technisches Gebiet

Ein Wischerarm besteht im wesentlichen aus einer Wischstange und einem Gelenkteil und dient zur Verbindung eines Wischblattes mit einem Antrieb.

### Stand der Technik

Zur Verbindung der Wischstange mit dem Gelenkteil ist es bekannt, einfache oder doppelte Nietverbindungen einzusetzen oder eine nietlose Verbindung durch Formschluß als Folge einer Umformung des Gelenkteils zu verwenden (siehe z.B. EP-A-0 785 116). Weiterhin ist es bekannt, das Gelenkteil und die Wischstange formschlüssig durch Einlegen in vorgeformte korrespondierende Aussparungen zu verbinden.

Nachteilig ist hier, daß nach dem Einlegen der Wischstange in das Gelenkteil stets eine Umformung von Seitenwänden des Gelenkteils erforderlich ist. Bei diesen Verbindungen ist es schwer, den sicheren Eingriff der Vorsprünge zu gewährleisten und den Formschluß zu erhalten.

### Erfindung

Durch die konische Verbindung ist eine Montage ohne Werkzeug möglich, da lediglich ein Einschieben der Wischstange in das Gelenkteil vorgenommen werden muß.

Die Lagefixierung der Wischstange innerhalb des Gelenkteils kann entweder durch eine Verrastung oder durch eine Zugfeder erfolgen. Auch eine Selbsthemmung aufgrund eines entsprechenden Konuswinkels ist insbesondere dann vorteilhaft, wenn ein Lösen der Verbindung nicht mehr beabsichtigt ist.

Durch einen zusätzlichen Haltebereich innerhalb des Gelenkteils läßt sich die Stabilität der Verbindung weiter erhöhen.

### Zeichnung

In der Zeichnung ist ein erfindungsgemäßer Wischarm dargestellt. Es zeigt die
- Fig. 1: eine Ansicht von unten auf die Verbindungsstelle des Gelenkteils mit einer Wischstange, die
- Fig. 2: einen Schnitt längs der Linie II/II aus Fig. 1, die
- Fig. 3: einen Schnitt längs der Linie III/III aus Fig. 1, die
- Fig. 4: einen Schnitt längs der Linie IV/IV aus Fig. 1.

### Ausführungsbeispiel

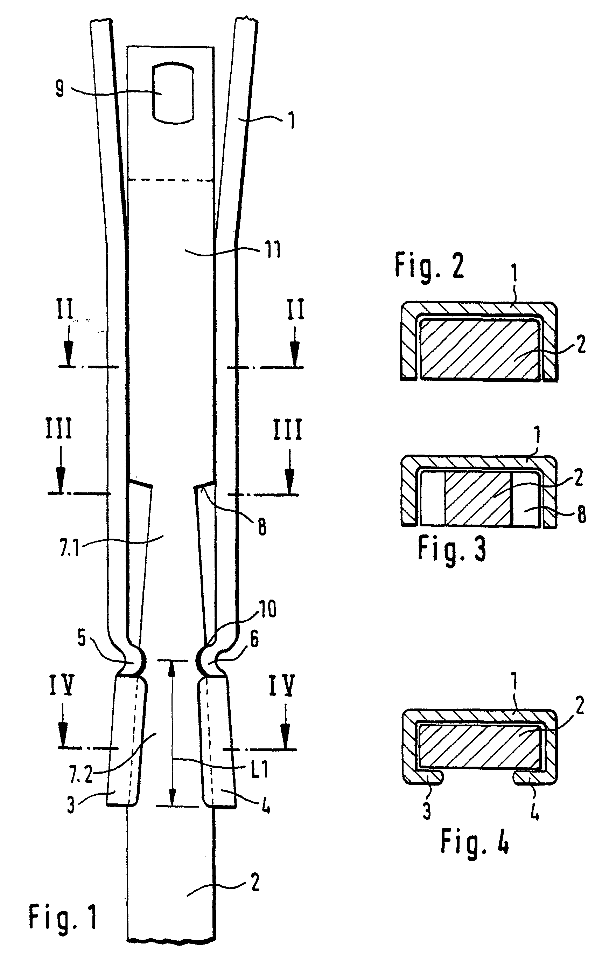

In der Fig. 1 ist derjenige Teil eines Wischarms dargestellt, an welchem ein Gelenkteil 1, welches mit einem nicht dargestellten Antrieb verbunden ist, mit einer Wischstange 2 verbunden ist.

Das Gelenkteil 1 weist an seinem der Wischstange 2 zugeordneten Ende Halteflächen 3, 4 eines Führungsbereichs auf, welche die Wischstange 2 übergreifen. Weiterhin ist das Gelenkteil 1 mit Rastvorsprüngen 5, 6 versehen, welche sich von den Seitenwänden des Gelenkteils 1 zueinander hinerstrecken und die lichte Weite zwischen den Seitenwänden verringern. Die Seitenwände des Gelenkteils 1 im Bereich der Halteflächen 3, 4 laufen konisch auf den Bereich der Vorsprünge 5, 6 zu. Auf der anderen Seite der Vorsprünge 5, 6 sind die Seitenwände des Gelenkteils 1 im wesentlichen parallel zueinander.

Die Wischstange 2 weist einen im wesentlichen rechteckigen Querschnitt auf und ist mit ihrem Ende in das Gelenkteil 1 eingesteckt. Um eine problemlose Montage zu ermöglichen, ist die Wischstange 2 in einem Teilbereich 7.1, 7.2 ebenfalls konisch zulaufend ausgebildet, wobei der Konus dem der Seitenwände des Gelenkteils 1 im Bereich der Halteflächen 3, 4 entspricht. Der Teilbereich 7.1, 7.2 hat eine derartige Längserstreckung, daß die Breite der Wischstange 2 so verringert wird, daß der Teilbereich ohne weiteres zwischen die Halteflächen 3, 4 bzw. die Vorsprünge 5, 6 eingelegt werden kann. Hierzu ist es im Ausführungsbeispiel ausreichend, daß die Länge des Teilbereichs 7.1, 7.2 die doppelte Länge des aus dem Haltebereich 3, 4 und den Vorsprüngen 5, 6 gebildeten Teilbereichs des Gelenkteils 1 aufweist. Grundsätzlich bestimmt aber der Konuswinkel und die Überlappung der Halteflächen 3, 4 die Abmessung des Teilbereichs 7.1, 7.2 .

Der Teilbereich 7.1, 7.2 endet an den Übergangsflächen 8, so daß der ursprüngliche Querschnitt mit parallelen Seiten wieder erreicht wird, wodurch die Wischstange im Gelenkteil seitlich geführt ist. Dieser Bereich wird als Haltebereich 11 bezeichnet. Diese Querschnittserweiterung ist nicht zwingend erforderlich, wesentlich ist die parallele Ausrichtung der Seiten.

Die Wischstange 2 ist weiterhin mit einer Ausnehmung 9 zur Aufnahme eines Endes einer Zugfeder versehen, wodurch die Wischstange in den Konus des Gelenkteils hineingedrückt werden kann.

Weiterhin weist die Wischstange im Teilbereich 7.1,7.2 eine Einschnürung 10 auf, die mit den Vorsprüngen 5, 6 des Gelenkteils 1 eine Rastverbindung bildet.

In Fig. 2 ist ein Querschnitt durch den Endbereich der in das Gelenkteil 1 eingebauten Wischstange 2 dargestellt. Zu erkennen ist das U-förmige Profil des Gelenkteils 1, in welchem die Wischstange 2 von drei Seiten geführt wird.

In Fig. 3 ist ein Schnitt am Ende des Teilbereichs 7.1 der Wischstange 2 dargestellt, so daß hier die aufgrund des konischen Verlaufs des Teilbereichs 7.1 entstehenden Übergangsflächen 8 zu erkennen sind.

In Fig. 4 ist ein Schnitt im Bereich der Halteflächen 3, 4 dargestellt. Diese Halteflächen 3, 4 verhindern ein Herausfallen der Wischstange 2 aufgrund des vorhandenen Formschlusses.

Aus den vorstehenden Figuren wird ersichtlich, daß die Wischstange 2 und das Gelenkteil 1 so geformt sind, daß eine Montage ohne Werkzeug möglich ist. Die Wischstange 2 besitzt einen Teilbereich 7.1, der so verjüngt ist, daß sie in den unten teilweise geöffneten, ebenfalls enger werdenden Bereich der Halteflächen 3, 4 eingelegt werden kann. Nach einem Verschieben der Wischstange 2 in Längsrichtung zum Gelenkteil 1 hin, sitzt die Wischstange 2 durch ihre konische Ausbildung in diesem Führungsbereich des Gelenkteils 1 unterhalb der Halteflächen 3, 4 fest und wird im einfachsten Fall durch die anschließend in der Aussparung 9 eingehängte Zugfeder gesichert.

Die Lage der Wischstange 2 kann zusätzlich durch die Verrastung über die Vorsprünge 5, 6 des Gelenkteils 1 und die entsprechende Einschnürung 10 an der Wischstange fixiert werden. Diese Verrastung wirkt zusätzlich zu der Verbindung über die konischen Flächen im Führungsbereich und stellt die Verbindung zwischen Wischstange 2 und Gelenkteil 1 auch ohne Zugfeder sicher.

Das Einschieben der Wischstange 2 in das Gelenkteil 1 kann gleichzeitig mit dem Montieren der Zugfeder erfolgen, wodurch ein Fertigungsvorgang eingespart werden kann. Die wahlweise vorgesehene Rastverbindung verhindert ein Lösen der Wischstange 2 aus dem Gelenkteil 1 selbst bei einem Bruch der Zugfeder.

Dadurch, daß die Verbindung zwischen der Wischstange 2 und dem Gelenkteil 1 lösbar ist, ist eine Reparatur der Wischstange 2 möglich.

Wird der Konuswinkel so gewählt, daß eine Selbsthemmung eintritt, so kann kein Lösen mehr erfolgen und die Verbindung ist dauerhaft.

## Patentansprüche

1. Wischarm, aufweisend ein Gelenkteil (1) und eine Wischstange (2), wobei die Wischstange (2) in dem Gelenkteil (1) in einem Führungsbereich (7.2) mittels beabstandeter Halteflächen (3, 4) geführt ist, wobei die Halteflächen (3, 4) im montierten Zustand zumindest einen Teilabschnitt (7.2) der Wischstange (2) übergreifen, **dadurch gekennzeichnet, daß** die Halteflächen (3, 4) konisch aufeinander zulaufen und daß die Wischstange (2) einen konisch zulaufenden Teilbereich (7.1, 7.2) aufweist, wobei die Außenabmessungen dieses Teilbereichs (7.1,7.2) in einem ersten Abschnitt (7.1) kleiner als die lichte Weite zwischen, den Haltenächen (3, 4) ist und in einem zweiten Abschnitt, dem Führungsbereich (7.2) weiter als die lichte Weite zwischen den Halteflächen (3, 4) ist.

2. Wischarm nach Anspruche 1, **dadurch gekennzeichnet, daß** das Gelenkteil (2) mit Vorsprüngen (5, 6) versehen ist und daß der konisch zulaufende Teilbereich (7.1, 7.2) der Wischstange (2) mit einer entsprechenden Einschnürung (10) zur Aufnahme der Vorsprünge (5, 6) versehen ist.

3. Wischarm nach einem der Ansprüche 1 oder 2, **dadurch gekennzeichnet, daß** am Ende des innerhalb des Gelenkteils (1) geführten Endes der Wischstange (2) eine Zugfeder angeordnet ist.

4. Wischarm nach einem der Ansprüche 1 bis 3, **dadurch gekennzeichnet, daß** die Wischstange (2) einen sich an den konisch zulaufenden Teilbereich (7.1, 7.2) anschließenden Haltebereich (11) mit parallelen Seiten aufweist, in welchem die Wischstange (2) zur vollflächigen Anlage an parallele Seitenwände des Gelenkteils (1) gelangt.

5. Wischarm nach einem der Ansprüche 1 bis 4, **dadurch gekennzeichnet, daß** der Konuswinkel so gewählt ist, daß eine Selbsthemmung bewirkt wird.

## Claims

1. Wiper arm having an articulated part (1) and a wiper rod (2), the wiper rod (2) being guided in the articulated part (1) in a guide region (7.2) by means of spaced-apart retaining surfaces (3, 4), the retaining surfaces (3, 4) engaging, in the fitted state, over at least a subsection (7.2) of the wiper rod (2), **characterized in that** the retaining surfaces (3, 4) taper conically towards each other, and **in that** the wiper rod (2) has a conically tapering subregion (7.1, 7.2), the external dimensions of this subregion (7.1, 7.2) being smaller in a first section (7.1) than the clear width between the retaining surfaces (3, 4) and, in a second section, the guide region (7.2), being greater than the clear width between the retaining surfaces (3, 4).

2. Wiper arm according to Claim 1, **characterized in that** the articulated part (2) is provided with projections (5, 6), and **in that** the conically tapering subregion (7.1, 7.2) of the wiper rod (2) is provided with a corresponding constriction (10) for receiving the projections (5, 6).

3. Wiper arm according to either of Claims 1 and 2, **characterized in that** a tension spring is arranged at the end of that end of the wiper rod (2) which is guided within the articulated part (1).

4. Wiper arm according to one of Claims 1 to 3, **characterized in that** the wiper rod (2) has a retaining region (11) which adjoins the conically tapering subregion (7.1, 7.2), has parallel sides and in which the wiper rod (2) enters to bear over its full surface against parallel side walls of the articulated part (1).

5. Wiper arm according to one of Claims 1 to 4, **characterized in that** the cone angle is selected in such a manner that self-locking is effected.

## Revendications

1. Bras d'essuie-glace comportant une partie articulée (1) et une tige d'essuie-glace (2), la tige d'essuie-glace (2) étant guidée dans la partie articulée (1) dans une zone de guidage (7.2) à l'aide de surfaces de maintien (3, 4) écartées, les surfaces de maintien (3, 4) recouvrant à l'état monté au moins un segment partiel (7.2) de la tige d'essuie-glace (2),
**caractérisé en ce que**
les surfaces de maintien (3, 4) s'étendent l'une sur l'autre en cône et la tige d'essuie-glace (2) présente une zone partielle (7.1, 7.2) qui s'étend en cône, et dans un premier segment (7.1) les dimensions extérieures de cette zone partielle (7.1, 7.2) sont plus petites que la largeur intérieure entre les surfaces de maintien (3, 4) alors que dans un deuxième segment (7.2) à savoir, la zone de guidage, elles sont plus larges que la largeur intérieure entre les surfaces de maintien (3, 4).

2. Bras d'essuie-glace selon la revendication 1,
**caractérisé en ce que**
la partie articulée (2) est munie de saillies (5, 6), et la zone partielle (7.1, 7.2) - qui s'étend en cône - de la tige d'essuie-glace (2) est munie d'un rétrécissement (10) correspondant destiné à recevoir les saillies (5, 6).

3. Bras d'essuie-glace selon l'une des revendications 1 ou 2,
**caractérisé en ce qu'**
un ressort de traction est disposé à l'extrémité de l'extrémité - guidée à l'intérieur de la partie articulée (1) - de la tige d'essuie-glace (2).

4. Bras d'essuie-glace selon l'une des revendications 1 à 3,
**caractérisé en ce qu'**
à la suite de la zone partielle (7.1, 7.2) qui s'étend en cône, la tige d'essuie-glace (2) présente une zone de maintien (11) dont les côtés sont parallèles et dans laquelle la tige d'essuie-glace (2) vient s'appuyer sur toute sa surface à des parois latérales parallèles de la partie articulée (1).

5. Bras d'essuie-glace selon l'une des revendications 1 à 4,
**caractérisé en ce que**
l'angle conique est choisi de telle sorte qu'il provoque un blocage automatique.
